# EUROPÄISCHE PATENTANMELDUNG

(11) **EP 0 708 414 A2**
(43) Veröffentlichungstag der Anmeldung: **24.04.1996**
(21) Anmeldenummer: 95116321.1
(22) Anmeldetag: 17.10.1995
(51) Int. Cl.: G06K 19/077

(54) **Kontaktloser Datenträger und Verfahren zu seiner Herstellung**

(30) Priorität: 22.10.1994 DE 4437844
(71) Anmelder: MICHALK, Manfred, D-99096 Erfurt (DE)
(72) Erfinder: MICHALK, Manfred, D-99096 Erfurt (DE)
(74) Vertreter: Liedtke, Klaus, Dr.

(57) **Zusammenfassung**

2.1. Der Erfindung liegt die Aufgabe zugrunde, eine Anordnung und ein Verfahren zur Herstellung kontaktloser Datenträger anzugeben, die eine kostengünstige Herstellung ermöglichen, bei denen mechanische Spannungen weitgehend vermieden werden, die eine im Bereich des Chips ungestörte Laminatoberfläche mit hoher Designqualität ermöglichen und die sich durch eine hohe Biegefestigkeit auszeichnen.

2.2. Die Aufgabe dadurch gelöst, daß
- zwischen den Kernfolien eine Antenne angeordnet ist,
- das Gehäuse aus zwei gleichgroßen zur Teilungsebene symmetrischen Gehäusehälften besteht, die mit einer Randschräge und einem Radius versehen sind,
- das Gehäuse schichtsymmetrisch in den Kernfolien mit einem Preßsitz angeordnet ist und
- das Gehäuse mindesten zwei in der Symmetrieebene angeordnete Anschlüsse aufweist, die mit der Antenne verbunden sind.

2.3. Die Erfindung betrifft einen kontaktlosen Datenträger und ein Verfahren zur Herstellung eines kontaktlosen Datenträgers mit laminiertem Schichtaufbau, bestehend aus einem in einem Gehäuse angeordneten Chip, aus mit Durchbrüchen für das Gehäuse versehenen Kernfolien, aus Deckfolien und einer Antenne.

## Beschreibung

Die Erfindung betrifft einen kontaktlosen Datenträger und ein Verfahren zur Herstellung eines kontaktlosen Datenträgers mit laminiertem Schichtaufbau, bestehend aus einem in einem Gehäuse angeordneten Chip, aus mit Durchbrüchen für das Gehäuse versehenen Kernfolien, aus Deckfolien und einer Antenne.
Die Erfindung ist vorzugsweise bei kontaktlosen Chipkarten anwendbar. Sie ist jedoch auch für Datenträger geeignet, bei denen ein in einem Gehäuse angeordneter Chip mit einer Antenne verbunden ist.
Solche Anordnungen können beispielsweise zur Warensicherung gegen Diebstahl verwendet werden oder als Zahlungsmittel mit elektronischer Sicherung in Form von geldstückähnlichen Gebilden.

Im Stand der Technik ist es bekannt, die Daten- und Energieübertragung zwischen kontaktlosen Datenträgern und den Schreib- und Lesestationen mittels induktiver Kopplung, Mikrowelle oder kapazitiver Einkopplung zu realisieren. Sende- bzw. Empfangsmittel sind Antennen oder metallische Flächen, die mit dem Chip verbunden sind. Um die bestehenden Abmessungsnormen und die Anforderungen an die mechanische Belastbarkeit der Datenträger zu erfüllen, ist es erforderlich, daß die beim Gebrauch auftretenden mechanischen Kräfte keine Beschädigung des Halbleiterchips, der elektrischen Verbindungen oder der Sende- und Empfangsmittel, die im folgenden Antenne genannt werden, verursachen.

Es sind Anordnungen bekannt, bei denen die Chips auf einer flexiblen Leiterfolie, die auch die Antenne trägt oder bildet, mittels Bondverfahren befestigt werden. Weiter ist es bekannt, die Chips mittels Direktkontaktierungsverfahren zu montieren.
Bei diesen Verfahren wird der mechanische Schutz des Chips und der Kontaktleitungen zwischen Chip und Leiterkarte mit einer härtbaren Gieß- bzw. Abdeckmasse vorgenommen. Zum mechanischen Schutz des Chips und zur Vereinfachung der Montage werden Schutzringe, Gewebeplättchen und ähnliche Materialien bzw. Anordnungen angewendet.

Nachteilig bei diesen Anordnungen und Verfahren ist, daß die Datenträger und/oder die Antenne schichtunsymmetrisch in einer Plastikkarte laminiert werden, was zu erhöhten Zugspannungen an den Leiterbahnen im Biegefall führt. Ebenso ist nachteilig, daß das Chip nicht exakt mittig im Laminat liegt. Im Biege- und Torsionsfall der Plastikkarte treten bedingt durch material- und anordnungsmäßige Inhomogenitäten mechanische Spannungsspitzen auf, die zur Zerstörung bestimmter Materialien und damit zum Funktionsausfall der gesamten Plastikkarte führen können. Ein weiterer Nachteil ist, daß ein schicht- und materialunsymmetrisch aufgebauter Datenträger zur Durchbiegung neigt.

Im Stand der Technik wurde versucht, diese Nachteile durch den Einsatz sehr flacher Miniaturgehäuse teilweise zu umgehen.

Der Erfindung liegt die Aufgabe zugrunde, eine Anordnung und ein Verfahren zur Herstellung kontaktloser Datenträger anzugeben, die eine kostengünstige Herstellung ermöglichen, bei denen mechanische Spannungen weitgehend vermieden werden, die eine im Bereich des Chips ungestörte Laminatoberfläche mit hoher Designqualität ermöglichen und die sich durch eine hohe Biegefestigkeit auszeichnen.

Erfindungsgemäß wird die Aufgabe dadurch gelöst, daß
- zwischen den Kernfolien eine Antenne angeordnet ist,
- das Gehäuse aus zwei gleichgroßen zur Teilungsebene symmetrischen Gehäusehälften besteht, die mit einer Randschräge und einem Radius versehen sind,
- das Gehäuse schichtsymmetrisch in den Kernfolien mit einem Preßsitz angeordnet ist und
- das Gehäuse mindesten zwei in der Symmetrieebene angeordnete Anschlüsse aufweist, die mit der Antenne verbunden sind.

Weitere vorteilhafte Ausgestaltungen der erfindungsgemäßen Anordnung sind in den Ansprüchen 2 bis 10 angegeben.

Die erfindungsgemäßen Datenträger zeichnen sich durch eine Reihe von Vorteilen aus:
1. Durch das Eindrücken des Gehäuses in die Kernfolien wird das Gehäuse vor dem Laminieren sicher fixiert. Es kann auf der Folie für verschiedene Arbeitsgänge verbleiben, es ermöglicht eine sichere Verbindung mit den Antennenkontakten durch einen Preßkontakt oder durch gelötete oder geklebte Kontaktstellen.
2. Durch den geringen Spalt zwischen Kernfolie und Gehäuse ergibt sich ein fester Kernfolienverbund, wodurch Lufteinschlüsse beim Laminieren und spätere Biegerisse verhindert werden.
3. Durch die abgerundeten Gehäusekanten wird das Fließen der Laminatfolien beim Laminieren erleichtert. Außerdem verringern die Rundungen mechanische Spannungen im Laminat.
4. Durch die Abflachung des Gehäuses wird das Laminat über den Gehäuserändern verstärkt, dies trägt ebenfalls zur Laminatbeständigkeit insbesondere bei Biegebelastungen bei und verringert die mechanischen Spannungen über den Gehäuserändern.
5. Der schichtmittige Austritt der Anschlüsse aus dem Gehäuse ermöglicht einen völlig symmetrischen Laminataufbau, der sich vorteilhaft auf die Biegefestigkeit der Karte und die Kartenqualität auswirkt. Die Karte läßt sich außerdem völlig eben herstellen.
Weitere wichtige Vorteile sind die sehr kostengünstige Gehäuseherstellung, die Möglichkeit ein sehr hohes Designniveau bei Chipkarten zu ermöglichen, die hohe Zuverlässigkeit durch die optimale Anordnung des Gehäuses im Durchbruch und in der Kartenlage und die günstige Herstellung des Laminierpaketes.

Gemäß dem erfindungsgemäßen Verfahren zur Herstellung der Datenträger wird die Antenne auf einer Kernfolie positioniert, eine Gehäusehälfte in den Durchbruch der Kernfolie eingedrückt und die Antenne mit den Gehäuseanschlüssen leitend verbunden.

Dabei ist es zweckmäßig, daß die Kernfolien so auf den Gehäusehälften angeordnet werden, daß der beim Kernfolienstanzen entstehende Stanzgrat vom Gehäuse weg weist.
Damit wird die Selbstzentrierung bei der Montage des Gehäuses erleichert und eine optimale Anpassung der Gehäusekonturen und der Lochkontur erreicht, was ein sauberes Einbetten des Gehäuses im Laminat ohne wesentliche Störung der designtragenden Deckfolien gewährleistet.

Die Erfindung wird im folgenden anhand von Ausführungsbeispielen näher erläutert. In der zugehörigen Zeichnung zeigen:
Figur 1 eine Seitenansicht des erfindungsgemäßen Gehäuses,
Figur 2 die zugehörige Draufsicht,
Figur 3 ein in Kernfolien eingepreßtes Gehäuse,
Figuren 4 bis 6 Anordnungsbeispiele des Gehäuses in einem Datenträger
Figur 7 ein thermoplastisches zweiteiliges Gehäuse
   und
Figur 8 ein thermoplastisches Gehäuse mit Justierstiften.

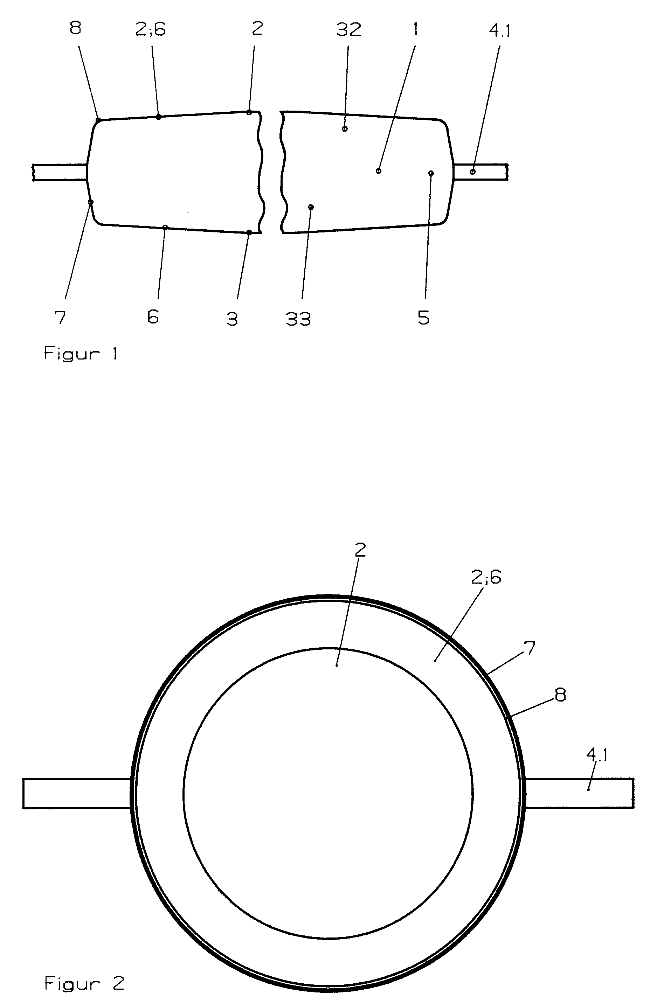

Das in den Figuren 1 und 2 dargestellte Gehäuse 1 ist nahezu schichtsymmetrisch ausgebildet.
Im beschriebenen Beispiel weist es folgende Abmessungen auf:
- die Dicke des Gehäuses 1 ist kleiner oder gleich 570 µm und die Dicke der äußeren Gehäuseanschlüsse 4.1 beträgt 40 bis 80 µm,
- die Dicke des Gehäuses 1 ist um 10 bis 50 µm größer als die Summe der Dicken der Kernfolien 10,11 und gegebenenfalls der Antennenfolien 15 im laminierten Zustand ausgeführt,
- die Gehäuseoberhälften 32 und -unterhälften 33 sind im Randbereich 6 kegelförmig abgeflacht, wobei die Abflachung auf einer Breite von 0,5 mm bis 1 mm in einem Winkel zwischen Gehäuseoberseite 2 bzw. - unterseite 3 und der jeweiligen Randflächen von 5° bis 15°angebracht ist,
- die Gehäuseseitenflächen 7 sind außerhalb der Schichtebene der Gehäuseanschlüsse 4.1,4.2 angeschrägt und verlaufen in Richtung der Gehäuseoberseite 2 bzw. -unterseite 3 spitzkegelig mit einem Winkel zur Gehäuseoberseite 2 bzw. -unterseite 3 von 85° bis 70°,
- die Gehäusekanten 8 sind mit einem Radius von größer oder gleich 50 µm versehen.

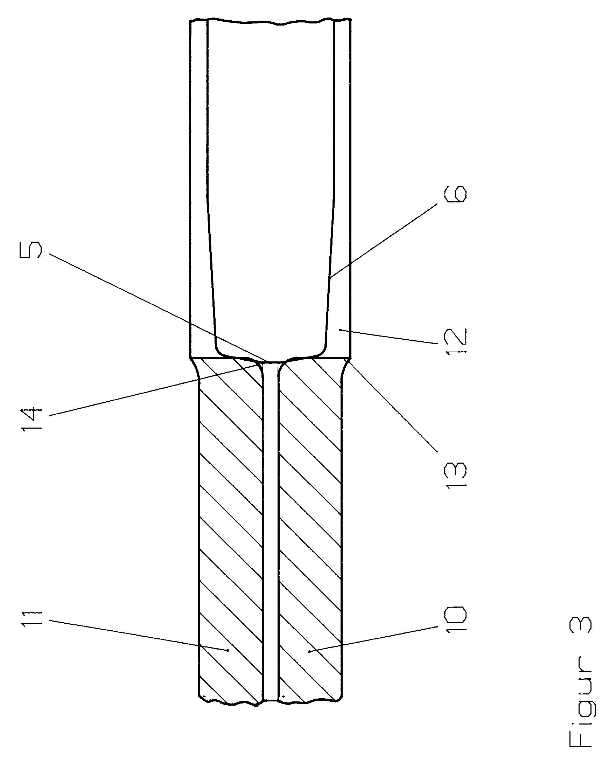

Figur 3 zeigt das in die Kernfolien 10,11 eingepreßte Gehäuse 1.

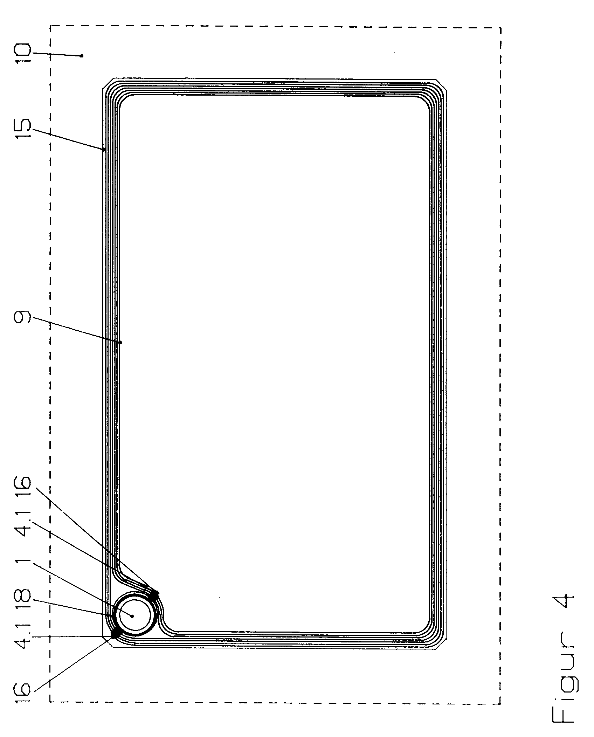

Bei der Montage des Datenträgers wird das Gehäuse 1 ähnlich einem zweiseitigen sehr flachen Justierstift in die Kernfolien 10,11 eingedrückt. Im beschriebenen Beispiel weist das Gehäuse 1 einen runden Querschnitt auf, bei dem die äußeren Anschlüsse 4.1 schichtmittig aus dem Gehäuse 1 herausragen.
Für übliche Anwendungsfälle sind zwei Anschlüsse ausreichend. Bei mehreren Anschlüssen werden diese vorteilhaft mit gleicher Teilung am Gehäuserand verteilt. Die Gehäuseseitenflächen 7 weisen eine spitzkeglige Gehäuserandschräge auf, mit der eine einfache selbstzentrierende Montage des Gehäuses 1 in die Kernfolien 10,11 ermöglicht wird. Die oberen und unteren kreisförmigen Gehäuseflächen 2,3 sind im Randbereich 6 kegelförmig abgeflacht.
Durch maßlich abgestimmte Ausführungen der Kernfoliendurchbrüche 12 und des Gehäuses 1 ist eine eingepreßte Anordnung des Gehäuses 1 in den Kernfolien 10,11 möglich.
Die Gehäusefläche in der Mitte der Gehäusedicke 5 ist größer oder gleich dem Lochdurchmesser der Durchbrüche 12 in den Kernfolien 10,11, während die Gehäusefläche der Gehäuseoberseite 2 bzw. der -unterseite 3 kleiner als der Lochdurchmesser der Kernfoliendurchbrüche 12 ist. Das Gehäuse 1 wird durch Kernfolien 10,11 der Dicke je einer Gehäusehälfte 32,33 aufgenommen. Die Dicke der Kernfolien 10,11 und gegebenenfalls der Antennenfolie 15 entspricht nach dem Laminieren in der Summe der Gehäusedicke am Gehäuserand. Die Montage erfolgt dabei durch Einpressen der Gehäusehälften 32,33 in die Kernfolien 10,11 und nachfolgendes Laminieren der Kernfolien 10,11 und der Deckfolien. Dabei befinden sich die Antennenbahnen 9 im dargestellten Beispiel auf einer der Kernfolien 10,11. Es ist auch möglich, die Antenne auf einer gesonderten Antennenfolie 15 oder als flache Drahtwicklung 34 zwischen die Kernfolien 10,11 zu legen. Entspechende Ausführungen sind in den Figuren 4 bis 6 dargestellt.

Eine vorteilhafte Ausführung entsteht dadurch, daß die Größe des Durchbruchs 35 für das Durchstecken der Gehäusehälften 32,33 durch die Antennenfolie 15 um 0,4 bis 1 mm in der Breite größer als die Gehäusefläche in Gehäuseschichtmitte 5 ist, so daß zwischen der Kante des Antennenfoliendurchbruches 35 und dem Gehäuse 1 ein antennenfolienfreier Randbereich 18 entsteht. Damit wird beim Laminieren ein fester Verbund der Kernfolien 10,11 untereinander direkt um das Gehäuse 1 geschaffen.

In den Figuren 4 bis 6 sind Anordnungen des Gehäuses 1 im Zusammenwirken mit der Antenne 15,34 erläutert.

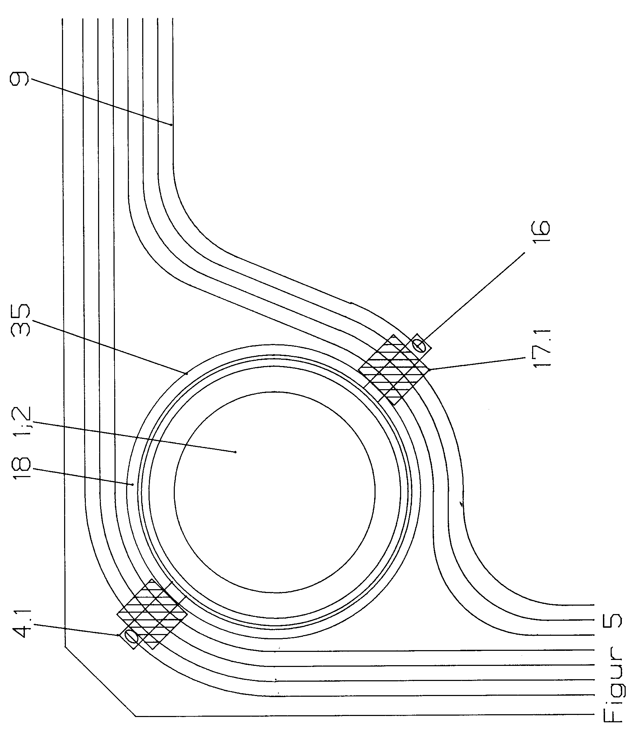

Die Figuren 4 und 5 zeigen eine Ausführung, bei der auf einer unteren Kernfolie 10 die Folienantenne 15 liegt und bei der der Durchbruch 35 durch die antennentragende Folie 15 so angeordnet ist, daß das Gehäuse 1 mitten in der Bahnanordnung 9 der Antenne 15 liegt. Dadurch ist es möglich, das Gehäuse 1 mit relativ kurzen äußeren Anschlüssen 4.1 zu versehen und es in einer relativ biegeneutralen Zone der Karte anzuordnen. Dabei ist der Gehäusedurchbruch 35 in der Nähe einer Ecke des Datenträgers angeordnet.

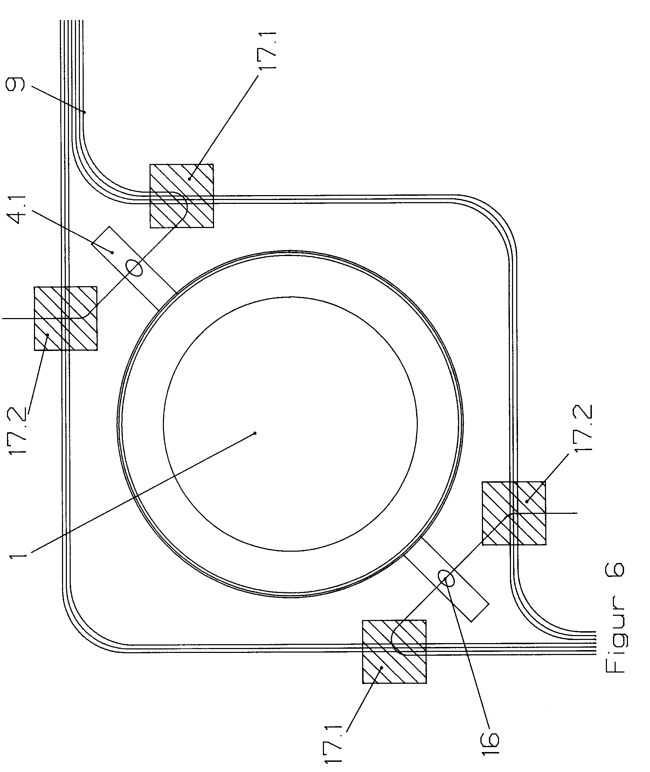

Die Gehäuseanschlüsse 4.1 beziehungsweise die Kontaktierstellen 16 der Antenne 15 werden zweckmäßig in Richtung der Kartendiagonale angebracht. Dadurch ergibt sich eine optimale Lage von Gehäuse 1 und Anschlüssen 4 bei Biegebelastungen der Karte. Figur 6 zeigt eine Ausführung, bei der eine Drahtantenne 34 verwendet wird.

In den Figuren 5 und 6 sind zweckmäßige Beispiele zur Verbindung der Gehäuseanschlüsse 4.1 mit der Antenne 15, 34 dargestellt. Hierzu kann die antennentragende Folie 15 in dem Bereich, in dem die äußeren Anschlüsse 4 des Gehäuses 1 die Antennenbahnen 9 kreuzen mit einer temperatur- und druckbeständigen elektrisch isolierenden Masse 17.1 bedeckt werden. Dadurch ist es möglich die Antenne 15 in einer Metallebene herzustellen.
Die Gehäuse 1 können aus Kunststoff, Keramik und ähnlichen Materialien bestehen. Die Anschlüsse 4 werden aus Metall, vorzugsweise aus Kupfer, Eisen oder Eisennickel und ähnlichen hergestellt. Sie können auch in veredelter Form (Gold,Silber,usw.) ausgeführt sein. Besonders zweckmäßig sind Gehäuse 1 aus hartelastischem Material. Die Basisfolien für die Folienantennen 15 werden vorzugsweise aus Polyester, Polyimid, Leiterplattenmaterial und ähnlichen hergestellt. Für die Kernfolien 10,11 werden vorzugsweise PVC, Polykarbonat und ABS-Kunststoffe verwendet.
Zur Verbesserung der Designqualität der Datenträger ist es zweckmäßig, die Gehäuseoberseite 2 und -unterseite 3 der Gehäuse 1 im Farbton der Kernfolien 10,11 zu bedrucken. Damit wird das Durchscheinen andersfarbiger Gehäuseflächen 2,3 durch die Deckfolien vermieden, was insbesondere bei dunklen Gehäusen 1 stören kann.

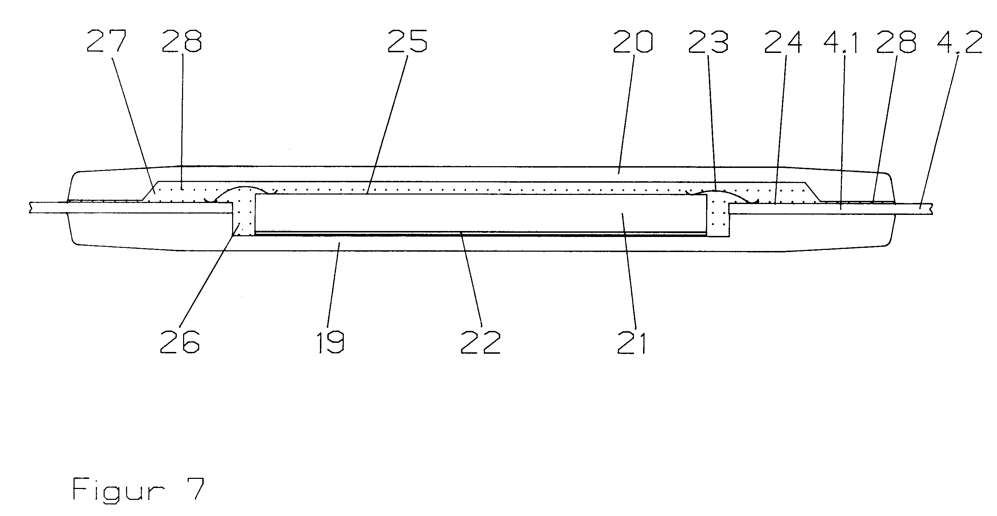

Figur 7 zeigt eine Ausführung, bei der das Gehäuse 1 aus zwei miteinander verklebten Gehäuseschalen 19,20 aus elektrisch isolierendem Kunststoff besteht. An der unteren Gehäuseschale 19 ist ein Trägerstreifen so angebracht, daß er sich im verklebten Zustand in der Klebeebene befindet.
Dadurch entfällt die im Stand der Technik erforderliche Modulfolie. Die Gehäuseunterschalen 19 sind während des Chipmontageprozesses Bestandteil eines endlosen Trägerstreifens und lassen sich dadurch leicht und einfach transportieren. Ferner lassen sich die im Stand der Technik bekannten Automatik-Bonder-Linien zur Verarbeitung hierbei verwenden.
Da der sehr flache, dünne Trägerstreifen mit der Klebeebene der Gehäuseschale 19 auf einem Niveau liegt, kann bei Handlingprozessen leicht die Gehäuseschale 19 von dem Anschluß 42 getrennt werden.
Zur Fixierung der Lage weisen die Anschlüsse 4.1,4.2 zumindest im Bereich der unteren Gehäuseschale 19 einen schwalbenschwanzförmigen Querschnitt auf, um den inneren Anschluß 4.2 besser im Kunststoff zu halten. Außerdem hat der innere Anschluß 4.2 Vernetzungslöcher, um die Verzahnung zu verbessern.

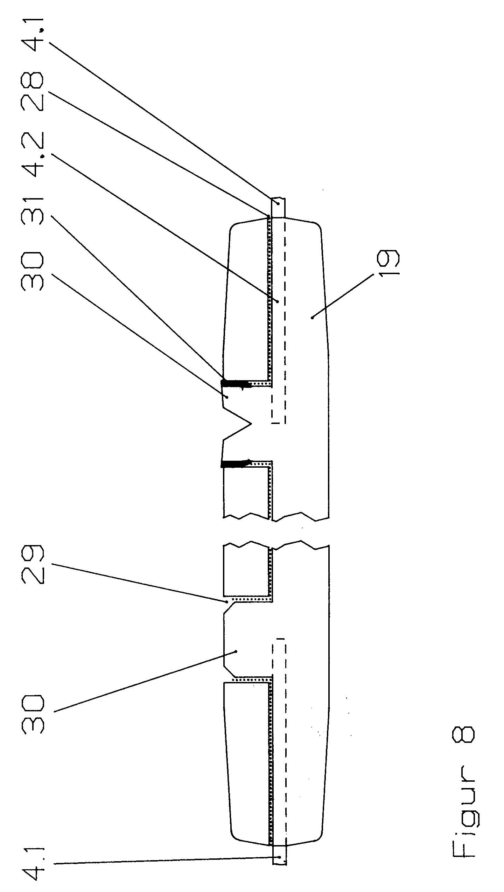

Eine weitere vorteilhafte Anordnung ist in Figur 8 dargestellt. Bei dieser Ausführung sind Justierstifte 30 in der unteren Gehäuseschale 19 und Justierlöcher 29 in der oberen Gehäuseschale 20 angebracht. Dadurch können vertikale und horizontale Verschiebungen der Gehäuseschalen 19,20 während des Klebe- bzw. Gießharzhärtens vermieden werden.
Dabei ist vorteilhaft, daß durch plastisches Verformen der Spitzen der Justierstifte 31 die obere Gehäuseschale 20 auf die untere Gehäuseschale 19 gepreßt wird. Dies bewirkt, daß Ober- und Unterschale 19,20 während der Zeit des Gießharzhärtens in eine definierten Lage verbleiben, während bei bekannten Verfahren das Gießharz 28 die Schalen 19,20 durch Benetzungskräfte auseinanderdrückt. Im Stand der Technik wird dies durch Auflegen von Gewichten kompensiert, was jedoch sehr aufwendige Herstellungsverfahren erfordert.
Bei der erfindungsgemäßen Anordnung ist es auch möglich, das Auflegen von Gewichten dadurch zu vermeiden, daß die Lagesicherung der Gehäuseschalen 19,20 während des Gießharzhärtens durch Aufbringen von Sekundenkleber auf die Spitze des Justierstiftes 30 und sofortiges Klebelöten erfolgt.
Ferner ist es möglich, durch Verwenden eines Gießharzes 28 mit einem solchen Füllstoffkorndurchmesser, der etwas größer ist als der Spalt Justierstift 30 zu Justierloch 29 und Verklemmen des Stiftes 30 zur Justierlochwandung 29 durch die Füllstoffkörper eine genaue vertikale Fixierung der Gehäuseschalen 19,20 zu erreichen.
Zweckmäßig ist es weiterhin, durch die Gestaltung eines Drahtstützwulstes zwischen Kontaktierfläche 24 des inneren Anschlusses 4.2 und dem Halbleiterchip 21 die Belastung der Verbindungsstellen zu reduzieren und die Lage des Mikrodrahtes 23 zu stabilisieren.

### BEZUGSZEICHENLISTE

- 1: Chipgehäuse
- 2: Gehäuseoberseite
- 3: Gehäuseunterseite
- 4.1: äußerer Anschluß
- 4.2: innerer Anschluß
- 5: Gehäuseschichtmitte
- 6: kegelförmig abgeflachter Randbereich einer Gehäuseseite
- 7: Gehäuseseitenfläche
- 8: Kantenradius
- 9: Antennenbahn
- 10: untere Kernfolie
- 11: obere Kernfolie
- 12: Kernfoliendurchbruch
- 13: Kernfolienstanzgrat
- 14: Verrundung des Kernfoliendurchbruchs
- 15: Folienantenne
- 16: Kontaktierstelle
- 17.1: Isolierlack zur Kreuzungsisolierung
- 17.2: Isolierlack zum Festlegen des Drahtendes
- 18: antennenfolienfreier Randbereich
- 19: Gehäuseunterschale
- 20: Gehäuseoberschale
- 21: Chip
- 22: Chipkleber
- 23: Mikrodraht
- 24: innere Kontaktierfläche
- 25: Chipoberfläche
- 26: Kavität in der Gehäuseunterschale
- 27: Kavität in der Gehäuseoberschale
- 28: Gießharz
- 29: Justierloch
- 30: Justierstift
- 31: plastisch verformte Justierstiftspitze
- 32: obere Gehäusehälfte
- 33: untere Gehäusehälfte
- 34: Drahtantenne
- 35: Durchbruch durch Antennenfolie

## Patentansprüche

1. Kontaktloser Datenträger mit laminiertem Schichtaufbau, mit aus einem in einem Gehäuse angeordneten Chip (21), aus mit Durchbrüchen für das Gehäuse versehenen Kernfolien (10,11), mit Deckfolien und einer Antenne, **dadurch gekennzeichnet, daß**
- die Antenne zwischen den Kernfolien (10,11) angeordnet ist,
- das Gehäuse aus zwei gleichgroßen Gehäusehälften (32,33) besteht, die außen zur Teilungsebene symmetrisch sind und eine Randschräge sowie einen Radius aufweisen,
- das Gehäuse schichtsymmetrisch in den Kernfolien (10,11) mit einem Preßsitz angeordnet ist und
- das Gehäuse mindesten zwei in der Symmetrieebene angeordnete Anschlüsse (4.1,4.2) aufweist, die mit der Antenne verbunden sind.

2. Datenträger nach Anspruch 1, **dadurch gekennzeichnet, daß** Ober- und Unterseite der Gehäusehälften (32,33) im Randbereich eine stumpfkegelförmige Abschrägung aufweisen.

3. Datenträger nach Anspruch 1 oder 2, **dadurch gekennzeichnet, daß** die Summe der Kernfoliendicken und gegebenenfalls der Antennenfoliendicken nach dem Laminieren etwas geringer als die maximale Gehäusedicke ist.

4. Datenträger nach einem der Ansprüche 1 bis 3, **dadurch gekennzeichnet, daß** die Antenne auf einer zwischen den Kernfolien (10,11) angeordneten Antennenfolie (15) angebracht ist

5. Datenträger nach einem der Ansprüche 1 bis 3, **dadurch gekennzeichnet, daß** eine der Kernfolien (10,11) als Antennenfolie (15) ausgebildet ist.

6. Datenträger nach einem der Ansprüche 1 bis 5, **dadurch gekennzeichnet, daß** der Durchbruch in der Antennenfolie (15) größer als die Abmessungen des Gehäuses in der Gehäusenschichtmitte ist.

7. Datenträger nach einem der Ansprüche 1 bis 6, **dadurch gekennzeichnet, daß** das Gehäuse zentrisch zur Antennenanordnung angeordnet ist.

8. Datenträger nach einem der Ansprüche 1 bis 7, **dadurch gekennzeichnet, daß** der Datenträger rechteckig ist und das Gehäuse in der Nähe einer Ecke des Datenträgers angeordnet ist.

9. Datenträger nach einem der Ansprüche 1 bis 8, **dadurch gekennzeichnet, daß** die Gehäusehälften (32,33) miteinander verklebt sind und in der unteren Gehäusehälfte (33) ein Trägerstreifen so angebracht ist, daß er sich im verklebten Zustand in der Klebeebene der beiden Gehäusehälften (32,33) befindet.

10. Datenträger nach Anspruch 9, **dadurch gekennzeichnet, daß** an einer der beiden Gehäusehälften (32,33) Justierstifte (30) und an der anderen Gehäusehälfte Justierlöcher (29) angebracht sind.

11. Verfahren zur Herstellung kontaktloser Datenträger mit laminierten Schichtaufbau, mit aus einem in einem Gehäuse angeordneten Chip (21), mit Durchbrüchen für das Gehäuse versehenen Kernfolien (10,11), aus Deckfolien und einer Antenne, **dadurch gekennzeichnet, daß** die Antenne auf einer Kernfolie (10,11) positioniert, eine Gehäusehälfte (32,33) in den Durchbruch der Kernfolie (10,11) eingedrückt und die Antenne mit Gehäuseanschlüssen leitend verbunden wird.

12. Verfahren nach Anspruch 11, **dadurch gekennzeichnet, daß** die Kernfolien so auf den Gehäusehälften (32,33) angeordnet werden, daß der beim Kernfolienstanzen entstandene Stanzgrat (13) vom Gehäuse weg weist.
